# EUROPÄISCHE PATENTANMELDUNG

(11) **EP 0 899 142 A2**
(43) Veröffentlichungstag der Anmeldung: **03.03.1999**
(21) Anmeldenummer: 98115884.3
(22) Anmeldetag: 22.08.1998
(51) Int. Cl.: B60J 7/14

(54) **Hardtop-Fahrzeug**

(30) Priorität: 27.08.1997 DE 19737349
(71) Anmelder: CTS Fahrzeugdachsysteme GmbH, 71079 Hamburg (DE)
(72) Erfinder: Klein, Berthold, 71277 Rutesheim (DE); Wezyk, Wojciech, 71065 Sindelfingen (DE)

(57) **Zusammenfassung**

Ein Hardtop-Fahrzeug weist eine aus einem Dachteil und einem schwenkbeweglich mit diesem verbundenen Rückfensterteil bestehende Dachkonstruktion auf, die von einer Schließstellung in eine heckseitige Ablagestellung bewegbar ist, wobei das Dachteil und das Rückfensterteil in der Ablagestellung in einem heckseitigen Aufnahmeraum zusammengeklappt übereinanderliegend aufgenommen sind. Damit bei abgeklappter Dachkonstruktion der nutzbare Kofferraum innerhalb des Aufnahmeraumes vergrößert und leichter zugänglich wird, ist vorgesehen, daß zwischen Dachteil und Rückfensterteil zumindest ein verlagerbares Dachelement angeordnet ist, das beim Bewegen der Dachkonstruktion in die heckseitige Ablagestellung von einer Schließstellung in eine Offenstellung bewegbar ist, wobei in der Offenstellung des zumindest einen Dachelementes ein zusätzlicher, als Kofferraum nutzbarer Raum innerhalb des Aufnahmeraumes geschaffen wird.

## Beschreibung

Die Erfindung bezieht sich auf ein Hardtop-Fahrzeug mit einer ein Dachteil und ein schwenkbeweglich mit diesem verbundenes Rückfensterteil aufweisenden Dachkonstruktion gemäß dem Oberbegriff des Anspruchs 1.

Bei bekannten Hardtop-Fahrzeugen dieser Art (DE 44 45 580 C1) wird zum Offenfahren die zweiteilige Dachkonstruktion nach Öffnen des heckseitigen Deckels in die Ablagestellung bewegt, wobei das Rückfensterteil und das Dachte eine zusammengeklappte übereinanderliegende Stellung innerhalb des heckseitigen Aufnahmeraumes einnehmen. Nachteilig an dieser Anordnung ist, daß in Ablagestellung der Dachkonstruktion nur ein relativ kleiner und schwer zugänglicher Kofferraum zur Unterbringung von Gegenständen im heckseitigen Aufnahmeraum verbleibt.

Aufgabe der Erfindung ist es, eine Dachkonstruktion für ein Hardtop-Fahrzeug so weiterzuentwickeln, daß in der Ablagestellung der Dachkonstruktion ohne geometrische Vergrößerung des Aufnahmeraumes der nutzbare Kofferraum zur Unterbringung von Gegenständen vergrößert und zugleich leichter zugänglich wird.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung von zumindest einem beim Bewegen der Dachkonstruktion in die heckseitige Ablagestellung verlagerbaren Dachelement ein zusätzlicher als Kofferraum nutzbarer Raum innerhalb des Aufnahmeraumes und ein verbesserter Zugang zum Kofferraum geschaffen wird. Vorzugsweise sind zwei - in Schließstellung der Dachkonstruktion gesehen - bündig aneinandergesetzte Dachelemente vorgesehen, wobei das vordere Dachelement dem Dachteil und das hintere Dachelement dem Rückfensterteil zugeordnet sind.

Beim Zurückklappen der Dachkonstruktion in die heckseitige Ablagestellung werden das vordere Dachelement vorzugsweise zwangsweise nach vorne und das hintere Dachelement nach hinten verlagert, so daß in der Ablagestellung der Dachkonstruktion beide Dachelemente etwa übereinanderliegend in einem in Fahrtrichtung gesehen vorderen Bereich des Aufnahmeraumes angeordnet sind. Durch diese Anordnung wird im hinteren Bereich des Aufnahmeraumes zwischen seitlichen Längsholmen von Dachte und Rückfensterteil ein zusätzlicher quaderförmiger Raum geschaffen, der als Kofferraum nutzbar ist.

Die Verlagerung beider Dachelemente erfolgt vorzugsweise durch eine Verschiebebewegung, wozu am Dachteil und am Rückfensterteil Führungen vorgesehen sind.

Ein Ausführungsbeispiel der Erfindung ist in den Zeichnungen dargestellt und wird im folgenden näher beschrieben.

Es zeigen
- Fig. 1: eine schematische Seitenansicht eines Hardtop-Fahrzeuges im Bereich von dessen heckseitiger Fahrzeugkarosserie und seiner Dachkonstruktion in Schließstellung,
- Fig. 2: eine Ansicht ähnlich Fig. 1, wobei ein vorderes Dachelement eine Lüfterstellung einnimmt,
- Fig. 3: eine Ansicht ähnlich Fig. 1, wobei das vordere Dachelement seine Offenstellung einnimmt,
- Fig. 4: eine Ansicht ähnlich Fig. 1, wobei das Dachteil und das Rückfensterteil in den heckseitigen Aufnahmeraum eingeklappt werden in einer Zwischenstellung,
- Fig. 5: eine Ansicht ähnlich Fig. 1 in zusammengeklappter Ablagestellung der Dachkonstruktion, wobei beide Dachelemente ihre Offenstellung einnehmen,
- Fig. 6: eine Draufsicht auf die Fig. 5 in Pfeilrichtung R,

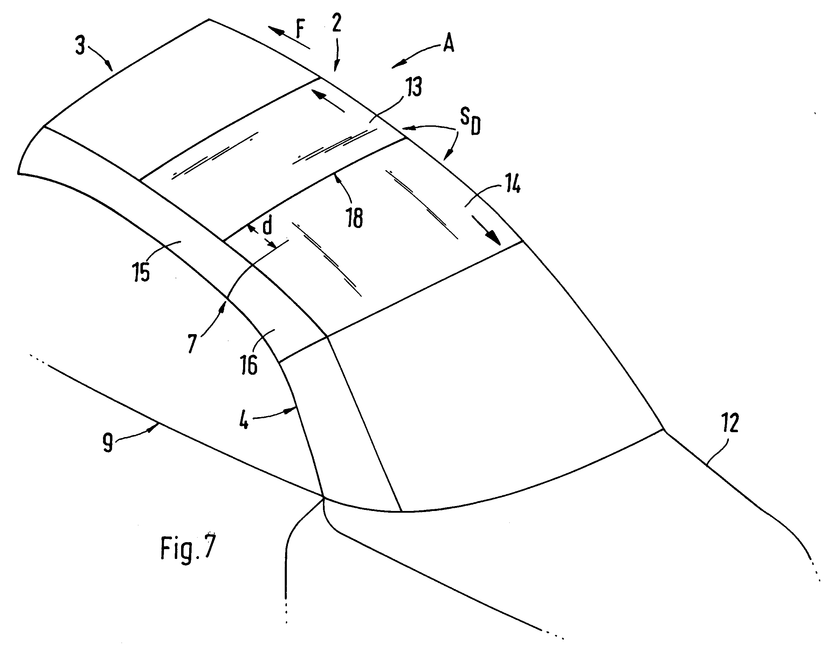

- Fig. 7: eine Teilansicht von schräg hinten auf eine Hälfte der Dachkonstruktion mit den erfindungsgemäßen Dachelementen in Schließstellung und
- Fig. 8: eine perspektivische Ansicht von schräg hinten auf die Dachkonstruktion, die gerade nach hinten in die heckseitige Ablagestellung bewegt wird, wobei die beiden Dachelemente bereits ihre Öffnungsstellung einnehmen.

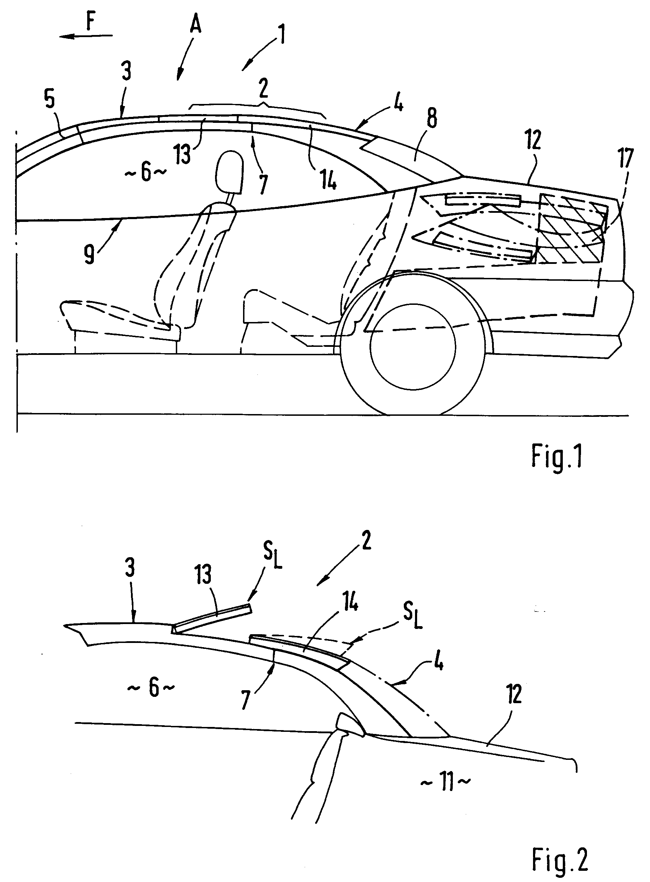

In Fig. 1 ist in einer schematischen Darstellung ein insgesamt mit 1 bezeichnetes Hardtop-Fahrzeug im Heckbereich der Fahrzeugkarosserie so veranschaulicht, daß die im Bereich einer Fahrzeuglängsseite befindlichen Bauteile in ihrer funktionalen Verbindung deutlich werden, wobei es sich für die weitere Beschreibung versteht, daß in symmetrischer Anordnung zur Fahrzeuglängsachse im Bereich der gegenüberliegenden Fahrzeuglängsseite eine gleiche Bauteilanordnung vorgesehen ist.

Das Hardtop-Fahrzeug 1 ist mit einer Dachkonstruktion 2 versehen, die ein Dachteil 3 und ein schwenkbeweglich mit diesem verbundenes Rückfensterteil 4 aufweist. In der dargestellten Schließstellung A der Dachkonstruktion 2 gemäß Fig. 1 liegt das Dachteil 3 im Bereich eines Windschutzscheibenrahmens 5 derart an, daß ein Fahrgastraum 6 des Fahrzeugs abgedeckt ist. Das formsteife Dachteil 3 und das ebenfalls formsteife Rückfensterteil 4 sind in einem gemeinsamen Übergangsbereich 7 über eine nicht näher dargestellte querverlaufende Drehachse schwenkbeweglich miteinander verbunden. Das Rückfensterteil 4, welches gemäß Fig. 1 mit einer Heckscheibe 8 versehen ist, ist unterhalb einer Gürtellinie 9 im Heckbereich 10 des Fahrzeuges um eine querverlaufende, nicht näher gezeigte fahrzeugfeste Schwenkachse drehbar am Aufbau gelagert.

Nach Lösen des Dachteiles 3 vom Windschutzscheibenrahmen 5 kann die Dachkonstruktion 2 von der Schließstellung A manuell oder motorisch über Zwischenstellungen, z.B. B in eine heckseiteige Ablagestellung C bewegt werden und umgekehrt. In der Ablagestellung C sind das Rückfensterteil 4 und das Dachteil 3 übereinanderliegend zusammengeklappt in einem heckseitigen Aufnahmeraum 11 aufgenommen, der mit einem schwenkbaren Deckel 12 abdeckbar ist. Der an seinem hinteren Rand schwenkbar am Aufbau gelagerte Deckel 12 wird durch eine Heckklappe, einen Verdeckkastendeckel oder dergleichen gebildet.

Die querverlaufende, etwa horizontal ausgerichtete Drehachse zwischen Dachteil 3 und Rückfensterteil 4 liegt in Ablagestellung C der Dachkonstruktion etwa im Bereich der Hinterkante von Dachteil 3 und Rückfensterteil 4.

Der Aufnahmeraum 11 dient einerseits zur Aufnahme der zusammengeklappten Dachkonstruktion 2 und andrerseits als Kofferraum zur Unterbringung von Gegenständen. Damit in Ablagestellung C der nutzbare Kofferraum zur Unterbringung von Gegenständen innerhalb des Aufnahmeraumes 11 vergrößerbar und leichter zugänglich ist, ist erfindungsgemäß vorgesehen, daß zwischen Dachteil 3 und Rückfensterteil 4 zumindest ein verlagerbares Dachelement 13, 14 vorgesehen ist, das beim Bewegen der Dachkonstruktion 2 in die heckseitige Ablagestellung C von einer Schließstellung S_{D} in eine Offenstellung S_{O} bewegbar ist. In der Offenstellung S_{O} des Dachelementes 13, 14 wird ein zusätzlicher als Kofferraum nutzbarer Raum innerhalb des Aufnahmeraumes 11 geschaffen.

Im Ausführungsbeispiel sind in Schließstellung A der Dachkonstruktion 2 zwei in Längsrichtung gesehen aneinandergesetzte verlagerbare Dachelemente 13, 14 angeordnet. Die beiden Dachelemente 13, 14 verlaufen in Schließstellung A jeweils außenhautbündig zum Dachteil 3 bzw. zum Rückfensterteil 4.

Die starr ausgebildeten Dachelemente 13, 14 können aus Glas, Kunststoff oder dgl. gefertigtsein oder als Blechkonstruktion ausgebildet sein.

Das in Fahrtrichtung F gesehen vorne liegende Dachelement 13 ist dem Dachteil 3 und das hintenliegend angeordnete Dachelement 14 ist dem Rückfensterteil 4 zugeordnet. Das vordere Dachelement 13 ist in einem hinteren Endbereich des Dachteiles 3 angeordnet und wird in seiner Schließstellung S_{D} an beiden Längsseiten von außenliegenden seitlichen Längsholmen 15 des Dachteiles 3 begrenzt.

Das dem Rückfensterteil 4 zugeordnete Dachelement 14 erstreckt sich in Schließstellung A der Dachkonstruktion 2 in einem vorderen Bereich der Längserstreckung des Rückfensterteiles 4 und wird von seitlich außenliegenden Längsholmen 16 des Rückfensterteiles 4 begrenzt.

Im Ausführungsbeispiel ist zumindest eines der beiden Dachelemente 13, 14 über eine nicht näher dargestellte Kinematik von einer Schließstellung S_{D} in eine Lüfterstellung S_{L} bewegbar und umgekehrt. In der Lüfterstellung ist jeweils das hintere Ende des Dachelementes 13 bzw. 14 nach oben hin angestellt (Fig. 2). Zudem sind beide Dachelemente 13, 14 in Längsrichtung verlagerbar. Dies kann durch eine Verschiebebewegung in Fahrzeuglängsrichtung oder eine Schwenkbewegung erfolgen. Vorzugsweise sind am Dachteil 3 und/oder am Rückfensterteil 4 im Bereich der Längsholme 15, 16 seitliche Führungen zur Verlagerung der zugeordneten Dachelemente 13, 14 vorgesehen (nicht näher dargestellt). Diese Führungen können ähnlich wie bei einem Schiebedach ausgebildet sein.

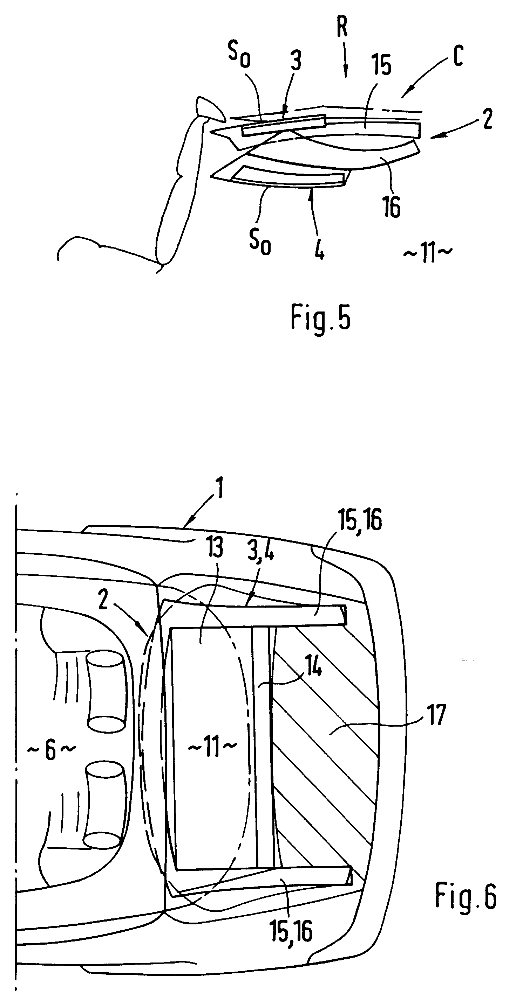

Während des Zurückklappens der Dachkonstruktion 2 wird das vordere Dachelement 13 zumindest abschnittsweise nach vorne unter das Dachteil 3 und das hintere Dachelement 14 nach hinten unter das Rückfensterteil 4 verlagert, so daß beide Dachelemente 13, 14 in der heckseitigen Ablagestellung C eine etwa übereinanderliegende Stellung einnehmen (Fig. 5), in der sie sich in einem vorderen Bereich des Aufnahmeraumes 11 befinden. Dadurch wird im hinteren Bereich des Aufnahmeraumes 11 ein zusätzlicher Raum 17 zwischen den Längsholmen 15, 16 von Dachteil 3 und Rückfensterteil 4 zur Unterbringung von Gegenständen geschaffen, der sich nach oben hin bis zur Unterseite des geschlossenen Deckels 12 erstreckt. Insbesondere bei motorischer Betätigung der Dachkonstruktion 2 ist eine zwangsweise Bewegung der Dachelemente 13, 14 in ihre Offenstellung S_{O} vorgesehen, wenn die Dachkonstruktion 2 in die Ablagestellung C verlagert wird. Beide Bewegungen finden vorzugsweise überlagert statt.

In Schließstellung A der Dachkonstruktion 2 liegt eine querverlaufende Trennebene 18 beider Dachelemente 13, 14 etwa im Übergangsbereich 7 vom Dachteil 3 und Rückfensterteil 4 oder in Fahrtrichtung F gesehen etwas davor (Maß d).

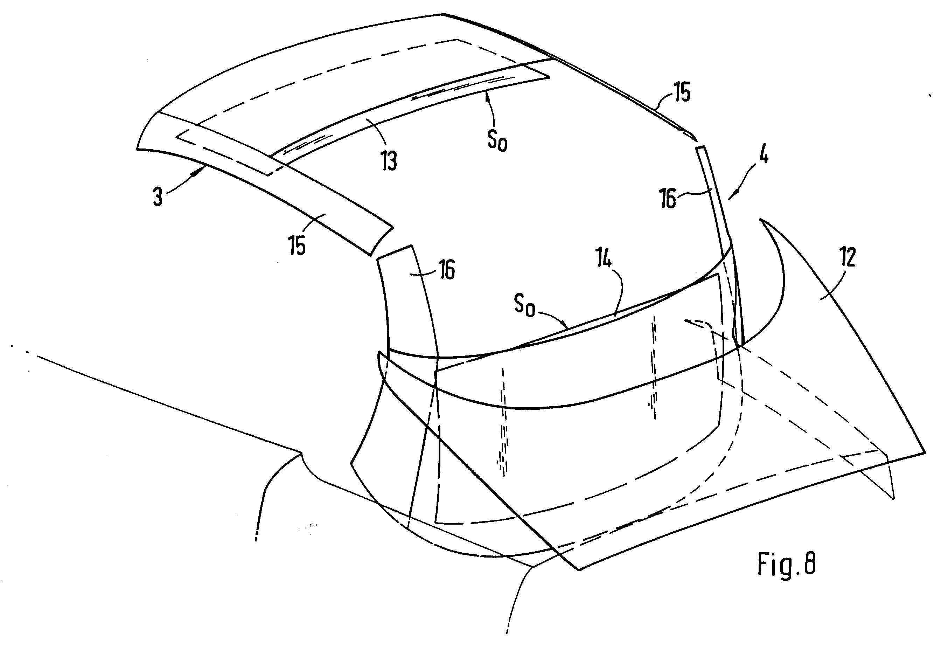

Gemäß Fig. 8 ist das vordere Dachelement 13 nicht vollständig in das vorgelagerte Dachteil 3 schiebbar, sondern es ragt noch einen geringen Betrag aus dem Dachteil 3 hervor. Das hintere Dachelement 14 ist hingegen fast vollständig unter das Rückfensterteil 4 verlagerbar.

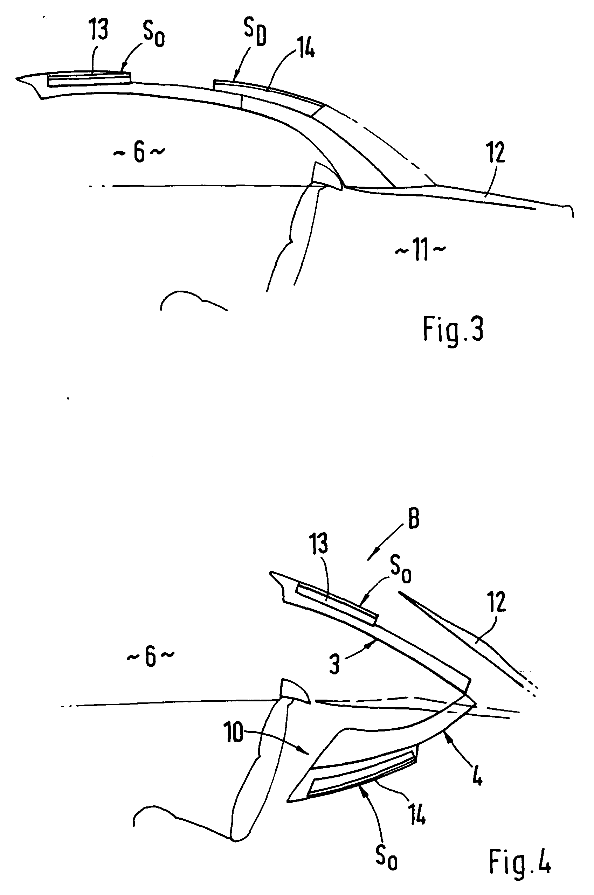

Beide Dachelemente 13, 14 sind in der Draufsicht gesehen etwa rechteckförmig ausgebildet und in Längs- und Querrichtung jeweils dem Formverlauf des angrenzenden Dachteiles 3 bzw. Rückfensterteiles 4 angepaßt. Das vordere Dachelement 13 kann auch in Schließstellung A der Dachkonstruktion 2 in seine Offenstellung S_{O} bewegt werden und weist dann eine Schiebedachfunktion auf (Fig. 3).

Die Umrisse des nutzbaren Kofferraumes innerhalb des heckseitigen Aufnahmeraumes 11 sind in Fig. 1 mit gestrichelten Linien dargestellt, wobei durch die erfindungsgemäße Anordnung der Dachelemente 13, 14 der quaderförmige Raum 17 hinzugewonnen wird.

## Patentansprüche

1. Hardtop-Fahrzeug mit einer ein Dachteil und ein schwenkbeweglich mit diesem verbundenes Rückfensterteil aufweisenden Dachkonstruktion, die von einer Schließstellung in eine heckseitige Ablagestellung bewegbar ist, wobei das Dachteil und das Rückfensterteil in der Ablagestellung in einem heckseitigen Aufnahmeraum zusammengeklappt übereinanderliegend aufgenommen sind, dadurch gekennzeichnet, daß zwischen Dachteil (3) und Rückfensterteil (4) zumindest ein verlagerbares Dachelement (13 bzw. 14) vorgesehen ist, das beim Bewegen der Dachkonstruktion (2) in die heckseitige Ablagestellung (C) von einer Schließstellung (S_{D}) in eine Offenstellung (S_{O}) bewegbar ist, wobei in der Offenstellung (S_{O}) des Dachelements (13 bzw. 14) zumindest ein zusätzlicher als Kofferraum nutzbarer Raum (17) innerhalb des Aufnahmeraumes (11) geschaffen wird.

2. Hardtop-Fahrzeug nach Anspruch 1, dadurch gekennzeichnet, daß am Dachteil (3) und am Rückfensterteil (4) - in Schließstellung (A) der Dachkonstruktion (2) gesehen - zwei in Längsrichtung aneinandergesetzte verlagerbare Dachelemente (13, 14) angeordnet sind.

3. Hardtop-Fahrzeug nach Anspruch 2, dadurch gekennzeichnet, daß ein vorne liegendes Dachelement (13) dem Dachteil (3) und ein hintenliegendes Dachelement (14) dem Rückfensterteil (4) zugeordnet ist.

4. Hardtop-Fahrzeug nach einem oder mehreren der vorangegangenen Ansprüche, dadurch gekennzeichnet, daß das vorneliegende Dachelement (13) in einem hinteren Endbereich des Dachteils (3) angeordnet ist und daß das Dachelement (13) an seinen beiden Längsseiten von außenliegenden Längsholmen (15) des Dachteiles (3) begrenzt ist.

5. Hardtop-Fahrzeug nach einem oder mehreren der vorangegangenen Ansprüche, dadurch gekennzeichnet, daß das dem Rückfensterteil (4) zugeordnete Dachelement (14) - in der Schließstellung (A) der Dachkonstruktion (2) gesehen - in einem vorderen Bereich des Rückfensterteiles (4) vorgesehen und von seitlich außenliegenden Längsholmen (16) des Rückfensterteiles (4) begrenzt ist.

6. Hardtop-Fahrzeug nach einem oder mehreren der vorangegangenen Ansprüche, dadurch gekennzeichnet, daß zumindest eines der Dachelemente (13 bzw. 14) - in Schließstellung (A) der Dachkonstruktion (2) gesehen - in eine Lüfterstellung (S_{L}) bewegbar ist, in der das hintere Ende des Dachelementes (13 bzw. 14) gegenüber dem Dachteil (3) oder dem Rückfensterteil (4) angehoben ist.

7. Hardtop-Fahrzeug nach einem oder mehreren der vorangegangenen Ansprüche, dadurch gekennzeichnet, daß am Dachte (3) und/oder am Rückfensterteil (4) seitliche Führungen zum Verlagern der Dachelemente (13, 14) ausgebildet sind.

8. Hardtop-Fahrzeug nach einem oder mehreren der vorangegangenen Ansprüche, dadurch gekennzeichnet, daß während des Zurückklappens der Dachkonstruktion (2) das vordere Dachelement (13) nach vorne und das hintere Dachelement (14) nach hinten verlagert wird, so daß beide Dachelemente (13, 14) in der Ablagestellung (C) eine etwa übereinanderliegende Stellung in einem vorneliegenden Bereich des Aufnahmeraumes (11) einnehmen.

9. Hardtop-Fahrzeug nach einem oder mehreren der vorangegangenen Ansprüche, dadurch gekennzeichnet, daß die Dachelemente (13, 14) beim Bewegen der Dachkonstruktion (2) in die heckseitige Ablagestellung (C) zwangsweise in ihre Offenstellung (S_{O}) verlagert werden.

10. Hardtop-Fahrzeug nach einem oder mehreren der vorangegangenen Ansprüche, dadurch gekennzeichnet, daß eine querverlaufende Trennebene (18) der beiden Dachelemente (13, 14) in Fahrtrichtung (F) gesehen etwa im Übergangsbereich (7) von Dachteil (3) und Rückfensterteil (4) oder etwas vorgelagert hierzu liegt.
